Europäisches Patentamt

**European Patent Office**

**Office européen des brevets**

(11) Publication number: **0 162 648**
**A1**

# (12) EUROPEAN PATENT APPLICATION

(21) Application number: **85303354.6**

(22) Date of filing: **13.05.85**

(51) Int. Cl.⁴: **B 27 B 5/20**

(30) Priority: **23.05.84 IT 2189984 U**

(43) Date of publication of application:
**27.11.85 Bulletin 85/48**

(84) Designated Contracting States:
**BE DE FR GB**

(71) Applicant: **Black & Decker Inc.**
**Drummond Plaza Office Park 1423 Kirkwood Highway**
**Newark Delaware 19711(US)**

(72) Inventor: **Alessio, Lorenzo E.**
**via Cairoli, 60**
**I-22053 Lecco (Como)(IT)**

(74) Representative: **Lucas, Brian Ronald et al,**
**Lucas, George & Co. 135 Westhall Road**
**Warlingham Surrey CR3 9HJ(GB)**

(54) **Manually translatable circular saw with unidirectional brake.**

(57) A circular saw, having a circular saw unit (13) translatable
along guides (19), includes a friction brake unit (18) on the
saw unit (13) and cooperative with a fixed part (19) extending
parallel to the guides (19). The brake unit includes a brake
member (27) slidable along the fixed part (19) and urged
thereagainst to provide frictional braking action in the feeding
direction of the saw unit (13) along the guides (19), but not
providing braking action in the return direction of the saw
unit. Preferably, the fixed part (19) is a rod, and two brake
members (27) having friction pads (29) engage opposite sides
of the rod (19). The brake members may be urged by a wedg-
ing action or a pivoting action into frictional braking with the
rod in the feeding direction.

Fig.3

## MANUALLY TRANSLATABLE CIRCULAR SAW
## WITH UNIDIRECTIONAL BRAKE

### FIELD OF THE INVENTION

The present invention relates to circular saws of the hand-actuated translatable type. Such circular saws may have a circular saw unit which is manually translatable along a radial arm and known as radial arm saws, or may have a circular saw unit which is manually translatable within and across a working table.

### BACKGROUND OF THE INVENTION

When cutting by moving a circular saw unit through a piece of wood to be cut, both in the case of radial arm saws and in the case of a guided circular saw sliding beneath a working table through which the saw blade only partly emerges, the teeth of the saw blade are oriented in such a way as to keep the piece of wood in contact with the table on which it is supported and positioned.

When the saw blade teeth are so oriented, the blade tends to self-feed in the direction of cutting. The guides upon which the saw unit slides are arranged for reduced friction, so as to make the translation motion during cutting easier and less fatiguing, but such reduced friction facilitates this self-feeding. This self-feeding phenomenon is called "gobbling of the blade".

To try to overcome this drawback, the operator, while pulling the saw towards himself during cutting, must at the same time check that the saw blade feeds at a constant rate. This is not always easy, particularly when there are different degrees of hardness within the same piece of wood.

The control of the saw feeding rate can, therefore, be difficult, and, to reduce this drawback it has been proposed to employ a unidirectional hydraulic damping arrangement. Such a damping arrangement can consist of a piston-cylinder unit provided with a unidirectional check valve which controls the flow of hydraulic fluid in one direction through a bore, thus controlling the speed of the piston. While in the opposite direction the hydraulic fluid is allowed to flow freely and to be rapidly discharged, thus allowing an easy return of the saw unit to the resting position.

A hydraulic damping arrangement of this type is, however, cumbersome and expensive.

## SUMMARY OF THE INVENTION

The present invention is concerned with reducing the self-feeding problem while avoiding the complications and expense of a hydraulic damping arrangement.

A feature by which this is achieved is the provision of a unidirectional friction brake which frictionally brakes translation movement of the circular saw unit in the feeding direction but does not create appreciable braking action in the return direction.

Accordingly, therefore, there is provided by the present invention a circular saw having a power driven circular saw unit manually translatable relative to a work surface along longitudinally extending guides for cutting a workpiece supported on the work surface, wherein a friction brake unit is mounted on the saw unit for translational movement therewith and is cooperative with a part extending longitudinally substantially parallel to the guides and secured against lengthwise movement relative thereto, the friction brake unit comprising a brake member slidable along said part and urged thereagainst to provide frictional braking action in one direction of translation along the guides but not providing appreciable braking action in the return direction of translation along the guides.

The brake member is preferably movably mounted in the brake unit in such a manner that frictional drag occurring between the brake member and said part during movement of the brake member in said one direction increases urging of the brake member against said part, whereas any such frictional drag during movement of the brake member in the return direction tends to reduce such urging. Said part may be a rod, for example mounted in the radial arm of a radial arm saw.

Preferably a pair of brake members are disposed to operate on opposite sides of the rod, each preferably having a friction pad.

Preferably, the or each brake member may be wedge-shaped and disposed in sliding engagement on a side away from the rod with a wall of the brake unit, this wall being inclined towards the rod. This brake member wedges between the wall and the rod during movement of the saw unit in the feeding direction, i.e. in said one direction.

However, the or each brake member may be pivotally mounted on a lever which itself is pivotally mounted in the brake unit. The pivotal mounting of the brake member on the lever is advantageously displaced in said one direction relative to the pivotal mounting of the lever in the brake unit.

Other objects, features and advantages of the present invention will become more fully apparent from the following detailed description of the preferred embodiment, the appended claims and the accompanying drawings.

BRIEF DESCRIPTION OF THE DRAWINGS

In the accompanying drawings:

FIG. 1 illustrates in perspective view a radial arm saw according to the invention;

FIG. 2 diagramatically shows a vertical section through the radial arm of the saw of Fig. 1;

FIG. 3 shows a top plan view of the radial arm of Fig. 2 with parts broken away and some parts sectioned;

FIG. 4 is a top plan view, on a larger scale, of the friction brake unit shown in Figs. 2 and 3;

FIG. 5 is a section on the line V-V of Fig. 4; and

FIG. 6 is a top plan view, partly sectioned, of a second embodiment of a friction brake unit according to the invention.

DETAILED DESCRIPTION OF THE PREFERRED EMBODIMENTS

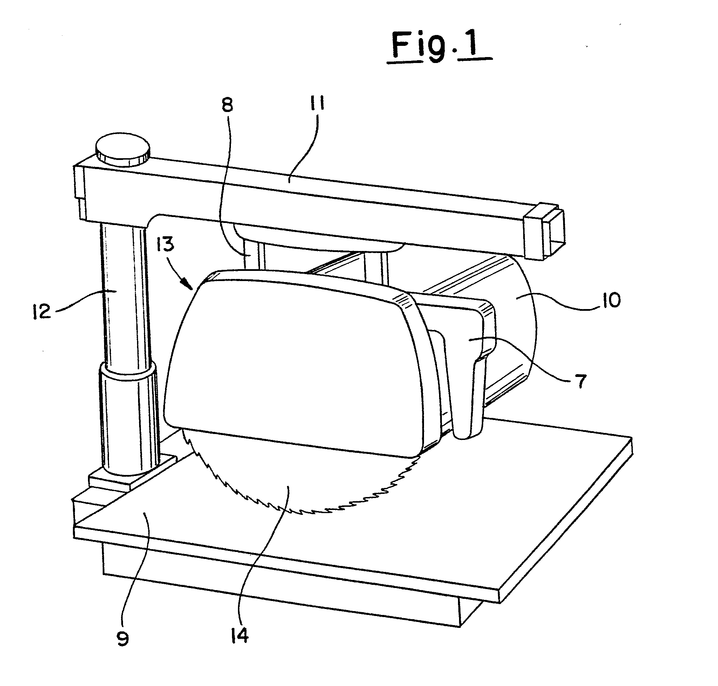

The preferred embodiment of the invention,in the form of a radial arm saw, is shown in Figs. 1 to 5.

Fig. 1 shows a radial arm saw having a work surface 9 from which upstands a column 12 having mounted thereon a radial arm 11. A circular saw unit 13 is suspended from a carriage 8 which is slidably translatable along the radial arm 11, a handle 7 being provided on the saw unit for this purpose.

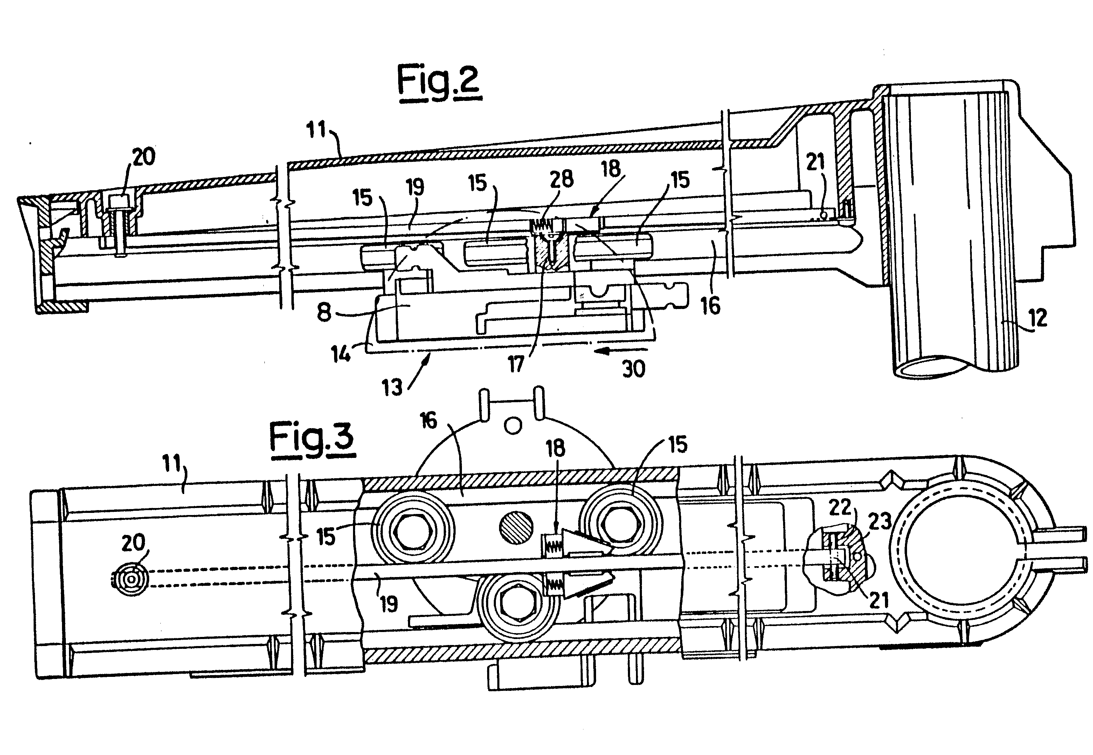

Figs. 2 and 3 show in greater detail the radial arm 11 with the circular saw unit 13 suspended thereunder. In Fig. 2 half the circular saw 14 is shown in broken lines. The carriage 8 of the saw unit has mounted on its upper side three rollers 15 which are rotatable in bearings about parallel vertical axes. The rollers 15 engage and run in longitudinal guides 16 which are formed as grooves in and extending the length of opposed side walls of the arm 11. A brake unit 18 is mounted on top of the carriage 8 and secured thereto by a screw 17. A rod 19, which is engaged on opposite sides by the brake unit 18, extends through and along the arm 11 for most of the length thereof. The rod 19 extends between and parallel to the groove-like seats 16 just above the level of the rollers 15. The rod 19 is secured adjacent its ends to the arm 11 by pins 20, 21. The pin 21 is mounted horizontally through the rear end of the rod and the ends of the pin 21 extending from each side of the rod 19 are pivotally mounted in bores 22 in an inner wall of the arm 11. The forward pin 20 is mounted downwardly in the arm 11 loosely through the rod 19 and terminates at its lower end with a stop. A recess 23 in the internal wall of the arm 11 accommodates the inner end of the rod 19 enabling the rod to have limited transverse swinging movement about the pin 20 with the ends of the pin 21 sliding in the bores 22. Also, the rod 19 is capable of limited transverse swinging movement about the pin 21. This enables the rod to self-align with movement of the brake unit 18 therealong as the saw unit 13 is manually pulled in the operating direction 30 during a cutting stroke. The saw unit 13 is translatable along the guides 16 relative to the work surface by movement of the wheels 15 along the guides 16.

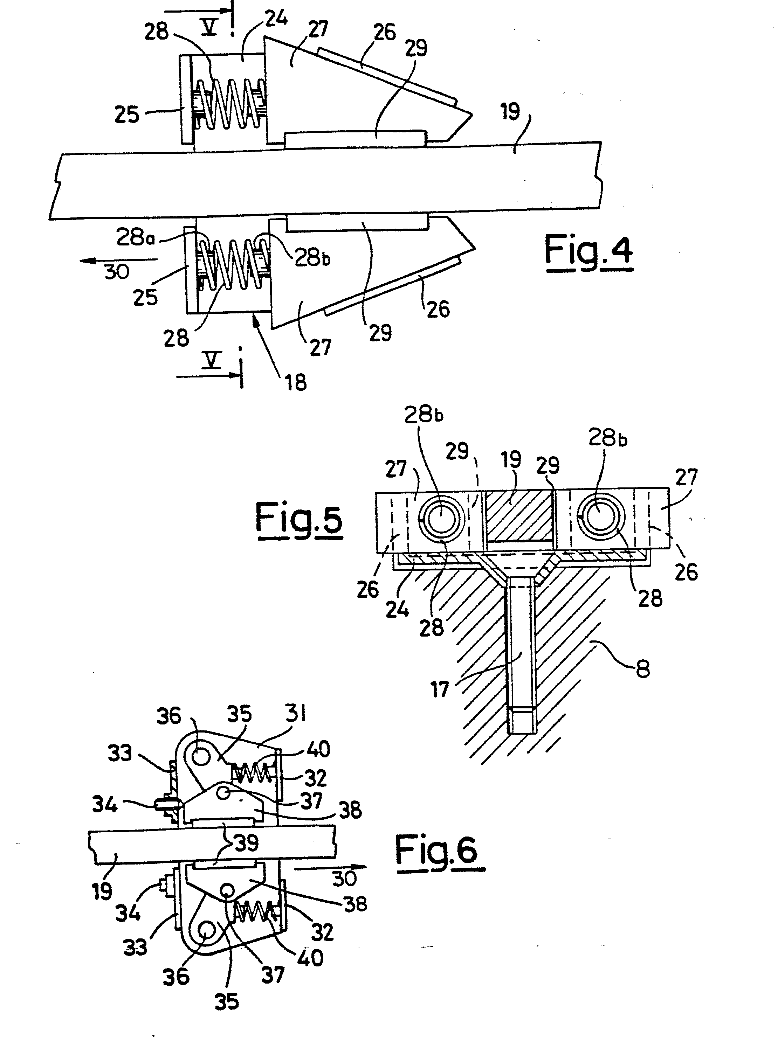

Fig. 4 shows a plan view of the brake unit 18, similar to Fig. 3 but in greater detail. The brake unit 18 is symmetrical about the rod 19 and has a flat base 24 with upstanding forward wall sections 25 and upstanding side walls 26, the latter being inclined towards the rod 19 in the rearward direction, i.e. the direction opposite to the feeding direction 30. A pair of wedge-shaped brake members 27 are disposed between the side walls 26 and the rod 19 and are spring urged in a wedging direction therebetween by coil springs 28 disposed at their ends on studs 28a, 28b extending respectively from the end wall portions 25 and the wedges 27. As can be seen, each wedge 27 has its inner side parallel to the rod 19 and its outer inclined side parallel to and in sliding engagement with the respective wall 26. Each wedge 27 has a rectangular friction pad 29 of a friction material having a high coefficient of friction. The pads 29 are recessed and secured in the inner walls of the brake members 27 and slide against opposite sides of the rod 19.

Fig. 5 is a section on the line V-V of Fig. 4 and shows the screw 17 securing the base plate 24 to the top of the carriage 8. The friction pads 29 can be seen engaging opposite sides of the rod 19 which has a rectangular cross section.

It should be noted that the brake members 27 can slide easily on the base plate 24 and along the inclined side walls 26, and under the light action of the springs 28 the brake members 27 are lightly resiliently biased rearwardly, so that the wedging action of the members 27 between the inclined side walls 26 and the rod 19 causes the friction pads 29 to be brought lightly into contact with the opposite sides of the rod 19.

In operation, the saw unit 13 is pulled forwardly, _i.e._ outwardly, along the arm 8 manually by the handle 10. During this movement in the feeding direction 30 the frictional drag between the friction pads 29 and the rod 19 causes the wedge-shaped brake members 27 to be dragged further into the wedge between the respective inclined wall 26 and the rod 19, so increasing the urging of the friction pads 29 against opposite sides of the rod 19 with consequential increased frictional drag therebetween, resulting in a braking action occurring between the brake unit 18 and the rod 19. This braking action counters any self-feeding tendency of the circular saw blade 14 while cutting a workpiece supported on the work surface 9 while the saw unit 13 is being manually translated along the guides 16 in the feeding direction 30. However, when the saw unit 14 is reversed along the arm 11 back towards the column 12 after completing a cut, the frictional drag between the pads 29 and the rod 19 tends to move the brake members 27 towards the front wall portions 25 against the biasing action of the springs 28; this causes the wedge-like brake members 27 to move out of wedging engagement with the inclined side walls 26 so reducing and substantially eliminating the urging of the members 27 against the sides of the rod 19 by the inclined walls 26. Thus, in the return direction of the saw unit there is effectively no braking action between the brake unit 18 and the rod 19, allowing the saw unit to be returned towards the column 12 without hindrance.

Fig. 6 shows a modification of the brake unit. It should be noted that in Fig. 6 the brake unit has been orientated oppositely to Fig. 4 with the feeding direction 30 resulting in movement to the right. This brake unit is also symmetrical about the rod 19, and has a base plate 31 with upstanding forward wall sections 32 and upstanding rear wall sections 33, the latter having adjustment screw 34 threaded therethrough. On each side of the rod 19, a lever 35 is pivoted at 36 at its outer end to the base plate 31 and has a brake member 38 pivoted at 37 to its inner end. Each brake member 38 has mounted thereon a friction pad 39 (similar to the friction pads 29) which is lightly urged against the rod 19 by a coil spring 40 lightly compressed between each forward wall section 32 and the respective lever 35. The adjusting screws 34 are set to adjust the rearmost position of the brake members 38 relative to the rod 19. In operation, when the saw unit is moved in the operating direction 30, the frictional drag between the friction pads 39 and the sides of the rod 19 causes the levers 35 to pivot rearwardly in a pincer type movement, so increasing urging of the friction pads 39 against the rod 19 to effect a braking action between the brake unit and the rod 19. Whereas, when the saw unit is returned in the reverse direction, i.e. opposite to the direction 30, the frictional drag between the friction pads 39 and the rod 19 tends to cause the levers 35 to pivot away from the rod 19 against the bias of the springs 40, i.e. decreasing the urging of the pads 39 against the rod 19, so eliminating braking action between the brake unit and the rod 19.

It will be appreciated, in the case of a circular saw in which the saw unit is manually translatable below the work surface with a portion of the saw blade extending through and above the work surface, the rod 19 in the above embodiments is mounted below the work surface in a similar manner to the way in which it is mounted in the arm 11.

In a further modification, the rod 19 may be eliminated and replaced by a part of the arm 11 (or the underside of the work surface when the saw unit is mounted thereunder) extending parallel to the guides 19, for example a longitudinal surface portion of an inner side wall of the arm 11. In this arrangement only one brake member 27 or 38 would be required and its friction pad 29, 39 would be arranged to cooperate with and slide along a longitudinal surface of this part which would take the place of and function the same as the rod 19.

The above described embodiments, of course, are not to be construed as limiting the breadth of the present invention. Modifications, and other alternative constructions, will be apparent which are within the scope of the invention as defined in the appended claims.

CLAIMS:

1. A circular saw having a power driven circular saw unit (13) manually translatable relative to a work surface (9) along longitudinally extending guides (16) for cutting a workpiece supported on said work surface (9), characterized by a friction brake unit (18) mounted on said saw unit (13) for translational movement therewith, and cooperative with a part (19) extending longitudinally substantially parallel to said guides (16) and secured against lengthwise movement relative thereto, said friction brake unit (18) comprising a brake member (27;38) slidable along said part (19) and urged thereagainst to provide frictional braking action in one direction of translation along said guides (16) but not providing appreciable braking action in the return direction of translation along guides (16).

2. The circular saw of Claim 1, characterized in that said brake member (27; 38) has a pad (29, 39) of friction material having a high coefficient of friction which contacts said part (19).

3. The circular saw of Claim 1 or 2, characterized in that said brake member (27; 38) is movably mounted in said brake unit (18) in such a manner that frictional drag occurring between said brake member (27, 38) and said part (19) during movement of said brake member (27, 38) in said one direction increases urging of said brake member (27, 28) against said part (19), whereas any such frictional drag during movement of said brake member (27, 38) in said return direction tends to reduce such urging.

4. The circular saw of any preceding claim, characterized in that said part (19) comprises a rod (19).

5. The circular saw of Claim 4, characterized in that said brake unit (18) has a second brake member (27; 38), and the two brake members (27; 38) are disposed on and act upon opposite sides of said rod (19).

6. The circular saw of Claim 5, characterized by a column (12) upstanding from said work surface (9), and an arm (11) mounted on and radially extending from said column (12), said arm (11) including said guides (16), and said rod (19) being mounted in and extending along said arm (11).

7. The circular saw of Claim 6, characterized in that said circular saw unit (13) is suspended from a carriage (8) movably mounted on said guides (16), said brake unit (18) is mounted on said carriage (8), and said rod (19) is disposed between said guides (16).

8. The circular saw of Claim 7, characterized in that said rod (19) is pivotally mounted in said arm (11) for limited pivotal movement transverse to said one direction to enable said rod (19) to self-align with movement of said brake unit (18) along said rod in said one direction.

9. The circular saw of any preceding claim, characterized in that the or each brake member (27) is wedge-shaped and is in sliding engagement on a side away from said part (19) with a wall (26) of said brake unit (18), said wall (26) being inclined towards said part (19).

10. The circular saw of Claim 9, characterized in that the or each wedge-shaped brake member (27) is resiliently urged in the opposite direction to said one direction to wedge the wedge-shaped brake member (27) between said inclined wall (26) and said part (19).

11.    The circular saw of any one of Claims 1 to 8, characterized in that the or each brake member (38) is pivotally mounted on a lever (35) which is pivotally mounted in said brake unit (18), the pivotal mounting of the brake member (38) on said lever (35) being displaced in said one direction relative to the pivotal mounting of said lever (35) in said brake unit (18).

12.    The circular saw of Claim 11, characterized in that said lever (35) is resiliently biased to pivot the brake member (38) towards said part (19).

13.    The circular saw of Claim 12, characterized in that an adjustable stop (34) is mounted in said brake unit (18) for limiting movement of the brake member (38) in said brake unit (18) in the direction opposite to said one direction.

# Fig.1

0162648

Fig.2

Fig.3

0162648

**Fig.4**

**Fig.5**

**Fig.6**

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| A | US - A - 3 192 816 (ZIMMERMAN) <br> * Totality * <br> -- | | B 27 B 5/20 |
| A | US - A - 3 586 076 (ROSENTHAL) <br> * Fig. 2 * <br> -- | | |
| A | US - A - 3 910 142 (JUREIT) <br> * Fig. 1,3,4 * <br> ---- | | |

|  | TECHNICAL FIELDS SEARCHED (Int. Cl.4) |
|---|---|
|  | B 27 B |

The present search report has been drawn up for all claims

| Place of search | Date of completion of the search | Examiner |
|---|---|---|
| VIENNA | 06-08-1985 | TRATTNER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82